(19) Europäisches Patentamt / European Patent Office / Office européen des brevets

(11) **EP 4 738 691 A1**

(12) **EUROPEAN PATENT APPLICATION**

(43) Date of publication:
06.05.2026 Bulletin 2026/19

(21) Application number: 25212088.6

(22) Date of filing: 29.10.2025

(51) International Patent Classification (IPC):
$H02P\ 21/00^{(2016.01)}$    $H02P\ 21/14^{(2016.01)}$
$H02P\ 21/16^{(2016.01)}$    $H02P\ 21/20^{(2016.01)}$
$H02P\ 21/22^{(2016.01)}$    $H02P\ 25/03^{(2016.01)}$

(52) Cooperative Patent Classification (CPC):
H02P 21/22; H02P 21/0025; H02P 21/141;
H02P 21/16; H02P 21/20; H02P 25/03;
H02P 2207/05

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 31.10.2024 CN 202411544737

(71) Applicant: Hycet Transmission System (Jiangsu)
Co., Ltd.
Zhenjiang, Jiangsu 212200 (CN)

(72) Inventors:
• TENG, Zhaolin
Zhenjiang 212200 (CN)
• Li, Song
Zhenjiang 212200 (CN)

(74) Representative: Murgitroyd & Company
165-169 Scotland Street
Glasgow G5 8PL (GB)

(54) **METHOD FOR CALIBRATING PERMANENT MAGNET SYNCHRONOUS MOTOR, ELECTRONIC DEVICE, STORAGE MEDIUM, AND VEHICLE**

(57) A method for calibrating a permanent magnet synchronous motor, an electronic device, a storage medium, and a vehicle are provided. The method includes: acquiring motor inductance parameters under different currents according to a preset direct-quadrature (d-q) axis rotating coordinate voltage equation of the permanent magnet synchronous motor; and processing the motor inductance parameters using a preset data processing script to generate a target two-dimensional (2D) lookup table, where the target 2D lookup table includes d-axis currents and q-axis currents corresponding to different motor flux linkages and motor torques, and is used for calibrating the permanent magnet synchronous motor. The embodiments of the present application acquires the motor inductance parameters via the d-q axis rotating coordinate voltage equation, and uses the preset data processing script to generate the target 2D lookup table containing the d-axis currents and the q-axis currents corresponding to different motor flux linkages and motor torques. This optimizes the calibration algorithm, reduces the operational load on both hardware and software, enables precise calibration of the current commands of the motor under different working conditions.

EP 4 738 691 A1

## Description

### TECHNICAL FIELD

The present application relates to the field of calibration technologies, and in particular, to a method and an apparatus for calibrating a permanent magnet synchronous motor, an electronic device, a storage medium, and a vehicle.

### BACKGROUND

The permanent magnet synchronous motor (PMSM), as the preferred choice for electric vehicle drive systems, has rapidly captured the new energy vehicle market and seen a gradually increasing market share due to its advantages such as fast torque response, small size, high efficiency, and low noise. The rapid development of electric vehicles and strong market demand are driving the swift advancement of drive motors towards higher speeds, lighter weight, and higher efficiency. Optimizing motor control and calibration strategies not only meets the demand for efficient control of drive systems in electric vehicles but also holds significant strategic importance for the competitiveness of PMSM products.

Existing calibration techniques involve using large-scale power test benches to apply three-phase currents and angles to the permanent magnet synchronous motor, obtaining direct-axis and quadrature-axis current values that meet the requirements of maximum torque per ampere (MTPA) and maximum torque per voltage (MTPV) characteristics. Finally, field-oriented control of the permanent magnet synchronous motor is achieved through a three-dimensional lookup table method based on voltage, speed, and torque. However, the aforementioned method occupies substantial chip memory, has low resource utilization, and involves a long calibration cycle, which does not align with the current market requirements for rapid iteration and updates of electric drive products.

### SUMMARY

In view of this, the present application aims to provide a method and an apparatus for calibrating a permanent magnet synchronous motor, an electronic device, a storage medium, and a vehicle, to address problems of master-slave role switching and accurate torque distribution after a vehicle steer-by-wire system failure, which are detrimental to achieving safety objectives of a system.

According to a first aspect of the present application, a method for calibrating a permanent magnet synchronous motor is provided. The method includes:

acquiring motor inductance parameters under different currents according to a preset direct-quadrature (d-q) axis rotating coordinate voltage equation of the permanent magnet synchronous motor; and

processing the motor inductance parameters using a preset data processing script to generate a target two-dimensional (2D) lookup table, where the target 2D lookup table includes d-axis currents and q-axis currents corresponding to different motor flux linkages and motor torques, and is used for calibrating the permanent magnet synchronous motor

Optionally, the acquiring the motor inductance parameters under different currents according to the preset d-q axis rotating coordinate voltage equation of the permanent magnet synchronous motor includes:

presetting a stator resistance and a permanent magnet flux linkage;

predetermining different stator d-axis currents and different stator q-axis currents;

monitoring a phase voltage fundamental value and a power factor of the permanent magnet synchronous motor operating under different working conditions; and

determining a stator d-axis voltage and a stator q-axis voltage based on the phase voltage fundamental value and the power factor

Optionally, the processing the motor inductance parameters using the preset data processing script to generate the target 2D lookup table includes:
processing the motor inductance parameters based on a preset torque equation and the preset data processing script to generate the target 2D lookup table, where the motor torque is calculated using the preset torque equation, and the motor flux linkage is calculated based on a preset d-axis voltage and a preset q-axis voltage at a corresponding rational speed.

Optionally, after the processing the motor inductance parameters using the preset data processing script to generate the target 2D lookup table, the method further includes:

constructing a feedback closed-loop control model based on the target 2D lookup table, a proportional-integral (PI) regulator and a preset space vector pulse width modulation (SVPWM) algorithm;

upon detecting that the permanent magnet synchronous motor is in a target operating state, modifying a voltage utilization rate of the permanent magnet synchronous motor based on the feedback closed-loop control model; and

updating the target 2D lookup table based on the modified voltage utilization rate of the permanent magnet synchronous motor

Optionally, after the constructing the feedback closed-loop control model based on the target 2D lookup table, the PI regulator and the preset SVPWM algorithm, the method further includes:

acquiring a current motor flux linkage and a current motor torque corresponding to the permanent magnet synchronous motor through sensors;

searching the target 2D lookup table for a target d-axis current and a target q-axis current based on the current motor flux linkage and the current motor torque;

obtaining current error values between an actual d-axis current and the target d-axis current, as well as between an actual q-axis current and the target q-axis current, respectively; and

processing the current error values through the PI regulator in the feedback closed-loop control model to generate a target voltage command.

Optionally, the updating the target 2D lookup table based on the modified voltage utilization rate of the permanent magnet synchronous motor includes:

obtaining a current voltage utilization rate and a target voltage utilization rate;

generating a modified d-axis current and a modified q-axis current based on the current voltage utilization rate, the target voltage utilization rate, the target d-axis current, and the target q-axis current; and

updating the target 2D lookup table based on the modified d-axis current and the modified q-axis current.

According to a second aspect of the present application, an apparatus for calibrating a permanent magnet synchronous motor is provided. The apparatus includes:

an acquisition module, configured to acquire motor inductance parameters under different currents according to a preset direct-quadrature( d-q) axis, rotating coordinate voltage equation of the permanent magnet synchronous motor; and
a calibration module, configured to process the motor inductance parameters using a preset data processing script to generate a target two-dimensional (2D) lookup table, where the target 2D lookup table includes d-axis currents and q-axis currents corresponding to different motor flux linkages and motor torques, and is used for calibrating the permanent magnet synchronous motor.

Optionally, the acquisition module includes:

a first acquisition sub-module, configured to preset a stator resistance and a permanent magnet flux linkage;

a second acquisition sub-module, configured to predetermine different stator d-axis currents and different stator q-axis currents on a power test bench;

a third acquisition sub-module, configured to monitor a phase voltage fundamental value and a power factor of the permanent magnet synchronous motor operating under different working conditions on the power test bench using a power analyzer; and

a fourth acquisition sub-module, configured to determine a stator d-axis voltage and a stator q-axis voltage based on the phase voltage fundamental value and the power factor.

Optionally, the calibration module includes:

a calibration sub-module, configured to process the motor inductance parameters based on a preset torque equation and the preset data processing script to generate the target 2D lookup table, where the motor torque is calculated using the preset torque equation, and the motor flux linkage is calculated based on a preset d-axis voltage and a preset q-axis voltage at a corresponding rational speed.

Optionally, the apparatus further includes:

a first module, configured to construct a feedback closed-loop control model according to the target 2D lookup table, a proportional-integral (PI) regulator and a preset space vector pulse width modulation (SVPWM) algorithm;

a second module, configured to modify, upon detecting that the permanent magnet synchronous motor is in a target operating state, a voltage utilization rate of the permanent magnet synchronous motor based on the feedback closed-loop control model; and

a third module, configured to update the target 2D lookup table based on the modified voltage utilization rate of the permanent magnet synchronous motor.

Optionally, the apparatus further includes:

a fifth module, configured to acquire a current motor flux linkage and a current motor torque corresponding to the permanent magnet synchronous motor through sensors;

a sixth module, configured to search the target 2D lookup table for a target d-axis current and a target q-axis current based on the current motor flux linkage and the current motor torque;

a seventh module, configured to obtain current error values between an actual d-axis current and the target d-axis current, as well as between an actual q-axis current and the target q-axis current, respectively; and

an eighth module, configured to process the current error values through the PI regulator in the feedback closed-loop control model to generate a target voltage command.

Optionally, the third module includes:

a first sub-module, configured to obtain a current voltage utilization rate and a target voltage utilization rate;

a second sub-module, configured to generate a modified d-axis current and a modified q-axis current based on the current voltage utilization rate, the target voltage utilization rate, the target d-axis current, and the target q-axis current; and

a third sub-module, configured to update the target 2D lookup table based on the modified d-axis current and the modified q-axis current.

According to a third aspect of the present application, an electronic device is provided, which includes: a processor and a memory, where the memory is configured to store computer programs capable of being executed by the processor, where the computer programs, when executed by the processor, cause the processor to implement the method for calibrating the permanent magnet synchronous motor as described in any one of the first aspect.

According to a fourth aspect of the present application, a non-transitory readable-readable storage medium configured to store computer programs is provided. The computer programs, when executed by a processor, cause the processor to implement the method for calibrating the permanent magnet synchronous motor as described in the first aspect.

According to a fifth aspect of the present application, a vehicle is provided, which includes the apparatus for calibrating the permanent magnet synchronous motor as described in the second aspect of the present application or the electronic device as described in the third aspect of the present application.

The method for calibrating the permanent magnet synchronous motor provided by the embodiments of the present application acquires the motor inductance parameters under different currents according to the preset d-q axis rotating coordinate voltage equation of the permanent magnet synchronous motor, and processes the motor inductance parameters using the preset data processing script to generate the target 2D lookup table. The target 2D lookup table includes the d-axis currents and the q-axis currents corresponding to different motor flux linkages and motor torques, and is used for calibrating the permanent magnet synchronous motor. The embodiments of the present application acquires the motor inductance parameters via the d-q axis rotating coordinate voltage equation, and uses the preset data processing script to generate the target 2D lookup table containing the d-axis currents and the q-axis currents corresponding to different motor flux linkages and motor torques. This optimizes the calibration algorithm, reduces the operational load on both hardware and software, enables precise calibration of the current commands of the motor under different working conditions, thereby improving efficiency and stability of the motor during high rational speed, high-temperature, and heavy-load operation, ensuring that the motor may operate with high efficiency and stability under various complex working conditions.

The above description is only an overview of technical solutions of the present application. To understand technical means of the present application more clearly, it may be implemented according to the content of this specification. Furthermore, to make the above-mentioned and other objectives features, and advantages of the present application more apparent and comprehensible, specific implementations of the present application are set forth below.

## BRIEF DESCRIPTION OF THE DRAWINGS

By reading the detailed description of preferred embodiments below, various other advantages and benefits will become clear to those skilled in the art. The drawings are only for a purpose of illustrating the preferred embodiments and should not be construed as limiting the present application. Furthermore, throughout the drawings, the same reference symbols denote the same components. In the drawings:

FIG. 1 is a flowchart of steps of a method for calibrating a permanent magnet synchronous motor provided by an embodiment of the present application;

FIG. 2 is a block diagram of an apparatus for calibrating a permanent magnet synchronous motor provided by an embodiment of the present application;

FIG. 3 is a schematic diagram of an electronic device provided by an embodiment of the present application;

FIG. 4 is a schematic diagram of a calibration algorithm for a permanent magnet synchronous motor provided by an embodiment of the present application.

## DETAILED DESCRIPTION OF THE EMBODIMENTS

Exemplary embodiments of the present application will be described below in more detail with reference to the accompanying drawings. Although exemplary embodiments of the present application are shown in the drawings, it should be understood that the present application may be implemented in various forms and should not be limited by the embodiments described herein. On the contrary, these embodiments are provided to enable a more thorough understanding of the present application and to fully convey the scope of the present application to those skilled in the art.

The terms "first", "second", etc., in this description and claims of the present application are used to distinguish similar objects, and are not used to describe a specific sequence or chronological order. It should be understood that data used in this way may be interchanged under appropriate circumstances, so that the embodiments of the present application may be implemented in sequences other than those illustrated or described herein. Furthermore, the objects distinguished by "first", "second", and the like, generally belong to the same category, and the number of objects is not limited. For example, a first object may be one or multiple. In addition, "and/or" in this description and the claims indicates at least one of connected objects, and the character "/" generally indicates an "or" relationship between the associated objects.

A method and an apparatus for calibrating a permanent magnet synchronous motor, a device, a medium, and a vehicle provided by the embodiments of the present application will be described in detail below with reference to the accompanying drawings, specific embodiments, and application scenarios.

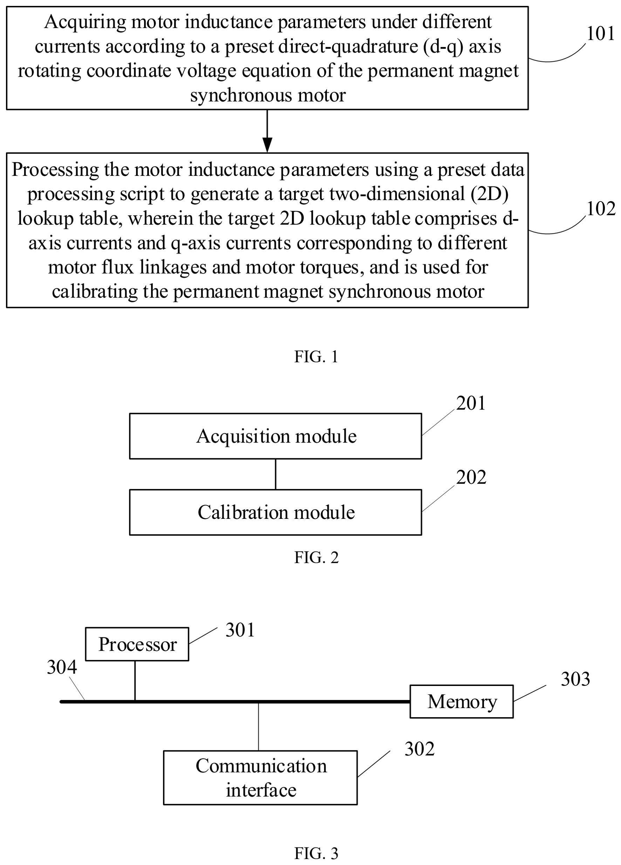

A first embodiment of the present application provides a method for calibrating a permanent magnet synchronous motor. Please refer to FIG. 1, which is a flowchart of steps of the method for calibrating a permanent magnet synchronous motor provided by the embodiments of the present application. The method for calibrating the permanent magnet synchronous motor includes following steps.

Step 101, acquiring motor inductance parameters under different currents according to a preset direct-quadrature (d-q) axis rotating coordinate voltage equation of the permanent magnet synchronous motor.

Furthermore, the step of acquiring motor inductance parameters under different currents according to the preset d-q axis rotating coordinate voltage equation of the permanent magnet synchronous motor includes: presetting a stator resistance and a permanent magnet flux linkage; predetermining different stator d-axis currents and stator q-axis currents on a power test bench using a preset calibration tool; motoring a phase voltage fundamental value and a power factor of the permanent magnet synchronous motor operating under different working conditions on the power test bench using a power analyzer; and determining a stator d-axis voltage and a stator q-axis voltage based on the phase voltage fundamental value and the power factor.

It should be noted that, in the embodiments of the present application, the preset d-q axis rotating coordinate voltage equation of the permanent magnet synchronous motor includes the following voltage equations:

$$Ud=Rs*id+Ld\frac{d}{dt}id\text{-}\omega e*Lq*iq \qquad \text{(Equation 1)}$$

$$Ud=Rs*iq+Ld\frac{d}{dt}id\text{-}\omega e*Lq*iqd+\omega e*\psi f \qquad \text{(Equation 2)}$$

In the above equations 1 and 2, Ud represents the stator d-axis voltage, Uq represents the stator q-axis voltage, id represents the stator d-axis current, iq represents the stator q-axis current, Rs represents the stator resistance, Ld represents a stator d-axis inductance, Lq represents a stator q-axis inductance, $\omega e$ represents a rotor rotation speed, and $\psi f$ represents the permanent magnet flux linkage.

Therefore, in the embodiments of the present application, the corresponding motor parameters Rs and $\psi f$ are set according to the voltage equations. On the established power test bench, different combinations of id and iq current commands are applied using a vector calibration tool. During this process, a WT3000 power analyzer is used to monitor the phase voltage fundamental value and the power factor of the motor operating under different working conditions. The combination of Ud and Uq is calculated, finally the Ld and Lq required for torque calculation are obtained.

Specifically, the calculation of the resistance Rs: Measure the three-phase resistance value at room temperature of 20°C, and calculate the resistance value at the corresponding temperature based on the resistance change rate at different temperatures.

Calculation of the flux linkage $\psi f$: Calculate a flux linkage value at the corresponding temperature by referring to a fundamental flux linkage of the permanent magnet, a Br-T curve, and a remanence coefficient.

Correction of current sampling values under dynamic conditions: The sampling of the three-phase currents is affected by an interrupt trigger position, PWM control cycle, and current angle $\theta$. A sampling delay compensation coefficient is added, and the WT3000 power analyzer is used for calibrated value acquisition.

Calculation of Ud and Uq: The power factor angle collected by the test bench equipment and a current command angle are summed to acquire angles of the Ud and Uq. The actual Ud and Uq are then calculated based on the phase voltage fundamental value collected by the WT3000 and the angles of the Ud and Uq.

Step 102, processing the motor inductance parameters using a preset data processing script to generate a target two-dimensional (2D) lookup table. The target 2D lookup table includes d-axis currents and q-axis currents corresponding to different motor flux linkages and motor torques, and is used for calibrating the permanent magnet synchronous motor.

Furthermore, the step of processing the motor inductance parameters using the preset data processing script to generate the target 2D lookup table includes: processing the motor inductance parameters based on a preset torque equation and the preset data processing script to generate the target 2D lookup table.

It should be noted that the torque equation is shown as the following Equation 3,

$$T=1.5*Pn*iq(\psi pm+(Ld\text{-}Lq)*id) \qquad \text{(Equation 3)}$$

Where, in the above equation 3, T represents the motor torque, Pn represents the number of motor pole pairs, iq represents the stator q-axis current, id represents the stator d-axis current, $\psi pm$ represents the permanent magnet flux linkage of the motor, Ld represents the stator d-axis inductance of the motor, and Lq represents the stator q-axis inductance of the motor. That is, the motor torque T is calculated using the preset torque equation.

Upon completion, data is processed using a Matlab or Python script according to equation 3 to obtain the id/iq current combinations for a flux-torque 2D lookup table under the requirements of maximum torque per ampere (MTPA) and maximum torque per voltage (MTPV).

It should be noted that, in the embodiment of the present application, the specific process for generating the target 2D lookup table is as follows: first, a motor temperature and a controller temperature may be controlled within a preset range, for example, the motor temperature is controlled within a range of 50-60°, and the controller temperature is controlled within a range of 50-60°.

Secondly, set initial values for id and iq. For example, set the initial value to 20A, and gradually increase it according to a set step size such as 20A, with a maximum value of 500A. performing a loop to obtain multiple sets of id and iq combinations. Then proceed with the following calculation process, which includes three parts.

The first part is the calculation of inductance Ld and Lq. The specific calculation process refers to the aforementioned equation 1 and equation 2, which can be used to calculate the inductance Ld and Lq corresponding to each set of id and iq.

The second part is the calculation of flux linkage λ. The specific calculation process refers to the following equation 4:

$$Us=\sqrt{Ud^2+Uq^2} \qquad \text{(Equation 4)}$$

Where, in the above equation 4, Us represents a motor stator phase voltage, and λ=Us/ωe. By specifying voltage values Ud and Uq, and different rotational speeds, the flux linkage λ is calculated, thereby obtaining the flux linkages λ corresponding to different rotational speeds (from a starting rotational speed of 500 rpm with a step size of 500 rpm up to the maximum rational speed of the motor). That is, the motor flux linkage λ is calculated based on a preset d-axis voltage and a preset q-axis voltage at a corresponding rational speed.

The third part is the calculation of torque T. The specific calculation process is as follows: Based on the inductance values obtained from the aforementioned calculation of inductance, set the phase current Is to increase from an initial value of 1A with a step size of 1A up to 500A. For each Is value, set the current angle (an angle between the id and iq currents) to decrease from an initial value of 90 degrees with a step size of 0.5 degrees down to 0 degrees. The maximum torque (i.e., MTPA) corresponding to the corresponding current is obtained using the aforementioned equation 3.

In summary, based on the calculated values, that is, the torque T and the flux linkage λ, the corresponding id/iq 2D table, namely the target 2D lookup table, can be obtained.

Furthermore, after step 102, that is, after the step of processing the motor inductance parameters using the preset data processing script to generate the target 2D lookup table, the method further includes: constructing a feedback closed-loop control model based on the target 2D lookup table, a proportional-integral (PI) regulator and a preset space vector pulse width modulation (SVPWM) algorithm; upon detecting that the permanent magnet synchronous motor is in a target operating state, modifying a voltage utilization rate of the permanent magnet synchronous motor based on the feedback closed-loop control model; and updating the target 2D lookup table based on the modified voltage utilization rate of the permanent magnet synchronous motor.

Furthermore, the step of updating target 2D lookup table based on the modified voltage utilization rate of the permanent magnet synchronous motor includes:

obtaining a current voltage utilization rate and a target voltage utilization rate;

generating a modified d-axis current and a modified q-axis current based on the current voltage utilization rate, the target voltage utilization rate, the target d-axis current, and the target q-axis current; and

updating the target 2D lookup table based on the modified d-axis current and the modified q-axis current.

It should be noted that, in the embodiment of the present application, the id/iq current values corresponding to different motor flux linkages λ and motor torques T are imported into the 2D lookup table. This table, together with the PI regulator and the SVPWM algorithm, forms the feedback closed-loop control model. When the permanent magnet synchronous motor operates under high rational speed, high temperature, or heavy load conditions, the voltage utilization rate is dynamically corrected. This approach enables the permanent magnet synchronous motor to operate with high efficiency and stability.

Furthermore, after the step of constructing the feedback closed-loop control model based on the target 2D lookup table, the PI regulator and the preset SVPWM algorithm, the method further includes:

acquiring a current motor flux linkage and a current motor torque corresponding to the permanent magnet synchronous motor through sensors;

searching the target 2D lookup table for a target d-axis current and a target q-axis current based on the current motor flux linkage and the current motor torque;

obtaining current error values between an actual d-axis current and the target d-axis current, as well as between an actual q-axis current and the target q-axis current, respectively; and

processing the current error values through the PI regulator in the feedback closed-loop control model to generate a target voltage command.

It should be noted that, in the embodiments of the present application:
Read current flux linkage ψ and current torque T: Acquire the current flux linkage ψ and the current torque T from the sensors.

Look up the target 2D lookup table: Based on the current flux linkage ψ and the current torque T, search the 2D lookup table for the corresponding id (d-axis current) and iq (q-axis current) values.

Calculate the current error value: Calculate the current error values between the actual currents and the target currents.

PI regulator adjustment: Use the PI regulator to adjust the current error values, and generate a new voltage command.

SVPWM generates PWM signals: Convert the new voltage command into three-phase voltages, and generate PWM signals.

Dynamically correct the voltage utilization rate: Based on the current voltage utilization rate, dynamically adjust the current command to ensure the voltage utilization rate remains within a reasonable range.

Updating the current command: Update the corrected current command into the 2D Table and recalculate the voltage command.

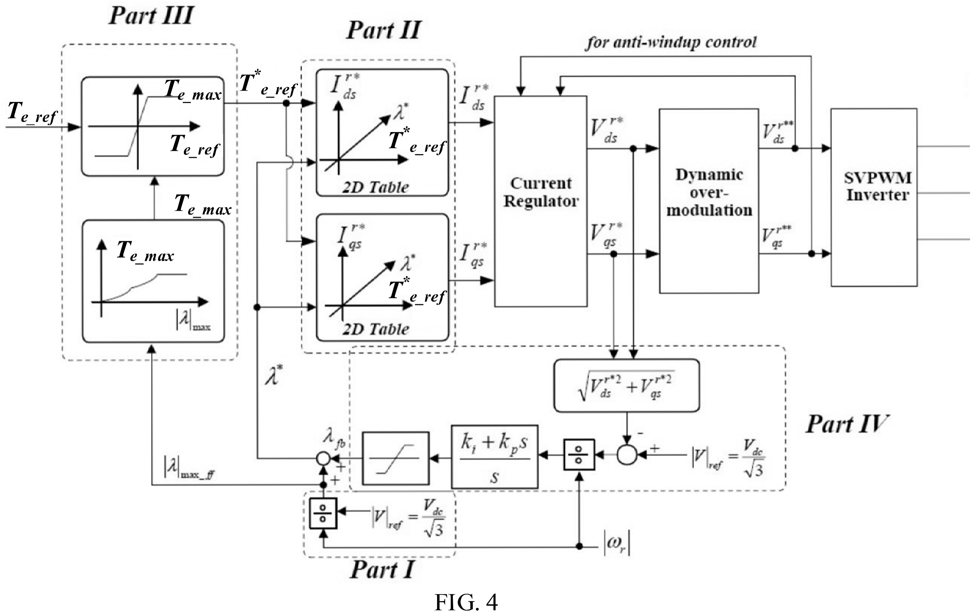

It should be noted that, referring to FIG. 4, which is a schematic diagram of an exemplary calibration algorithm principle, which mainly consists of four parts. Part I in the diagram represents a calculation of the maximum phase voltage output in a linear region of SVPWM. Part II in the diagram represents outputting the id/iq current command by looking up the table based on commanded torque and flux linkage. Part III in the diagram represents the commanded torque and flux linkage limiting module. Par IV in the diagram represents a voltage loop PI regulator.

Specifically, a torque command is acquired and processed by the maximum available torque and the maximum flux linkage limiting module (where both the torque and the flux linkage have defined upper and lower limits). Based on the id/iq 2D lookup table corresponding to the flux linkage (λ) and torque (T), the current commands are output. The phase voltage commands required for calculating a duty cycle are then obtained by processing the current commands and the actual feedback currents through the current loop PI regulator. The voltage loop feedback regulator (Part IV) rapidly and dynamically adjusts the flux linkage, maintaining the voltage utilization rate within a high-efficiency range, which can improve motor operational efficiency and reduce motor temperature rise.

The method for calibrating the permanent magnet synchronous motor provided by the embodiments of the present application acquires the motor inductance parameters under different currents according to the preset d-q axis rotating coordinate voltage equation of the permanent magnet synchronous motor, and processes the motor inductance parameters using the preset data processing script to generate the target 2D lookup table. The target 2D lookup table includes the d-axis currents and the q-axis currents corresponding to different motor flux linkages and motor torques, and is used for calibrating the permanent magnet synchronous motor. The embodiments of the present application acquires the motor inductance parameters via the d-q axis rotating coordinate voltage equation, and uses the preset data processing script to generate the target 2D lookup table containing the d-axis currents and the q-axis currents corresponding to different motor flux linkages and motor torques. This optimizes the calibration algorithm, reduces the operational load on both hardware and software, enables precise calibration of the current commands of the motor under different working conditions, thereby improving efficiency and stability of the motor during high rational speed, high-temperature, and heavy-load operation, ensuring that the motor may operate with high efficiency and stability under various complex working conditions.

A second embodiment of the present application further relates to an apparatus for calibrating a permanent magnet synchronous motor. As shown in its block diagram in FIG. 2, the apparatus includes:

an acquisition module 201, configured to acquire motor inductance parameters under different currents according to a preset d-q axis rotating coordinate voltage equation of the permanent magnet synchronous motor; and

a calibration module 202, configured to process the motor inductance parameters using a preset data processing script to generate a target 2D lookup table. The target 2D lookup table includes d-axis currents and q-axis currents corresponding to different motor flux linkages and motor torques, and is used for calibrating the permanent magnet synchronous motor.

Optionally, the acquisition module 201 includes:

a first acquisition sub-module, configured to preset a stator resistance and a permanent magnet flux linkage;

a second acquisition sub-module, configured to predetermine different stator d-axis currents and stator q-axis currents on a power test bench using a preset calibration tool;

a third acquisition sub-module, configured to monitor a phase voltage fundamental value and a power factor of the permanent magnet synchronous motor operating under different working conditions on the power test bench using a power analyzer; and

a fourth acquisition sub-module, configured to determine a stator d-axis voltage and a stator q-axis voltage based on the phase voltage fundamental value and the power factor.

Optionally, the calibration module 202 includes:
a calibration sub-module, configured to process the motor inductance parameters based on a preset torque equation and the preset data processing script to generate the target 2D lookup table.
Optionally, the apparatus further includes:

a first module, configured to construct a feedback closed-loop control model based on the target 2D lookup table, a PI regulator and a preset SVPWM algorithm;

a second module, configured to modify, upon detecting that the permanent magnet synchronous motor is in a target operating state, a voltage utilization rate of the permanent magnet synchronous motor based on the feedback closed-loop control model; and

a third module, configured to update the target 2D lookup table based on the modified voltage utilization rate of the permanent magnet synchronous motor.

Optionally, the apparatus further includes:

a fifth module, configured to acquire a current motor flux linkage and a current motor torque corresponding to the permanent magnet synchronous motor through sensors;

a sixth module, configured to search the target 2D lookup table for a target d-axis current and a target q-axis current based on the current motor flux linkage and the current motor torque;

a seventh module, configured to obtain current error values between an actual d-axis current and the target d-axis current, as well as between an actual q-axis current and the target q-axis current, respectively; and

an eighth module, configured to process the current error values through the PI regulator in the feedback closed-loop control model to generate a target voltage command.

Optionally, the third module includes:

a first sub-module, configured to obtain a current voltage utilization rate and a target voltage utilization rate;

a second sub-module, configured to generate a modified d-axis current and a modified q-axis current based on the current voltage utilization rate, the target voltage utilization rate, the target d-axis current, and the target q-axis current; and

a third sub-module, configured to update the target 2D lookup table based on the modified d-axis current and the modified q-axis current.

The apparatus for calibrating the permanent magnet synchronous motor device provided by embodiments of the present application acquires the motor inductance parameters under different currents according to the preset d-q axis rotating coordinate voltage equation of the permanent magnet synchronous motor, and process the motor inductance parameters using the preset data processing script to generate the target 2D lookup table. The target 2D lookup table includes the d-axis currents and the q-axis currents corresponding to different motor flux linkages and motor torques, and is used for calibrating the permanent magnet synchronous motor. The embodiments of the present application acquires the motor inductance parameters via the d-q axis rotating coordinate voltage equation and uses the preset data processing script to generate the target 2D lookup table containing the d-axis currents and the q-axis currents corresponding to different motor flux linkages and motor torques. This optimizes the calibration algorithm, reduces the operational load on both hardware and software, enables precise calibration of the current commands of the motor under different working conditions, thereby improving efficiency and stability of the motor during high rational speed, high-temperature, and heavy-load operation, ensuring that the motor may operate with high efficiency and stability under various complex working conditions.

Regarding the apparatus embodiments, as they are substantially similar to the method embodiments, the description is relatively concise. For relevant details, reference may be made to the corresponding sections of the method embodiments.

A third embodiment of the present application relates to a non-transitory computer-readable storage medium on which computer programs are stored. The computer programs, when executed by a processor, cause the processor to implement the steps of the method for calibrating the permanent magnet synchronous motor described above.

A fourth embodiment of the present application provides a vehicle, which includes the apparatus for calibrating the permanent magnet synchronous motor according to the second embodiment of the present application described above, or an electronic device according to a fifth embodiment of the present application.

The fifth embodiment of the present application provides an electronic device. As shown in FIG. 3, the electronic device includes a processor 301, a communication interface 302, a memory 303 and a communication bus 304. The processor 301, the communication interface 302, and the memory 303 communicate with each other via the communication bus 304.

The memory 303 is configured to store computer programs capable of being executed by the processor 301.

The processor 301 is configured to, when executing the program stored in the memory 303, implement following steps:

acquiring motor inductance parameters under different currents according to a preset d-q axis rotating coordinate voltage equation of the permanent magnet synchronous motor; and

processing the motor inductance parameters using a preset data processing script to generate a target 2D lookup table, where the target 2D lookup table includes d-axis currents and q-axis currents corresponding to different motor flux linkages and motor torques, and is used for calibrating the permanent magnet synchronous motor.

The communication bus 304 mentioned above may be a peripheral component interconnect (PCI) bus, an extended industry standard architecture (EISA) bus, etc. The communication bus may be divided into an address bus, a data bus, a control bus, or etc. For ease of representation, only one thick line is used in the diagram, but this does not imply that there is only one bus or one type of bus.

The communication interface 302 is used for communication between the above electronic device and other devices.

The memory 303 may include a random access memory (RAM) or a non volatile memory, such as at least one disk storage device. Optionally, the memory may also be at least one storage device located remotely from the aforementioned processor.

The processor 301 mentioned above may be a general-purpose processor, including a central processing unit (CPU), a network processor (NP), etc.; it may also be a digital signal processor (DSP), an application specific integrated circuit (ASIC), a field-programmable gate array (FPGA), or other programmable logic devices, a discrete gate, transistor logic devices, or discrete hardware components.

In the aforementioned embodiments, the method and apparatus may be implemented wholly or partially through software, hardware, firmware, or any combination thereof. When implemented using software, they may be realized wholly or partially in the form of a computer program product. This computer program product includes one or more computer program instructions. When the computer program instructions are loaded and executed on a computer, they generate, wholly or partially, the processes or functions described in the embodiments of the present application. The computer may be a general-purpose computer, a special-purpose computer, a computer network, or other programmable devices. The computer program instructions may be stored in a computer-readable storage medium or transmitted from one computer-readable storage medium to another computer-readable storage medium. For example, the computer program instructions may be transmitted from one website, computer, server, or data center to another website, computer, server, or data center via wired means (e.g., coaxial cable, optic fiber, digital subscriber line (DSL)) or wireless means (e.g., infrared, wireless, microwave, etc.). The computer-readable storage medium may be any available medium that can be accessed by a computer or a data storage device, such as a server or data center, integrating one or more available media. The available medium may be a magnetic medium (e.g., floppy disk, hard disk, magnetic tape), an optical medium (e.g., DVD), or a semiconductor medium (e.g., solid state disk (SSD)).

It should be noted that in this document, relational terms such as "first" and "second", etc., are used merely for distinguishing one entity or operation from another entity or operation, without necessarily requiring or implying any actual such relationship or order between these entities or operations. Furthermore, the terms "include", "comprise", or any other variation thereof are intended to cover non-exclusive inclusion, such that a process, a method, an article, or a device that includes a series of elements includes not only those elements but also other elements not explicitly listed, or elements inherent to such process, method, article, or device. Without further limitation, an element defined by the phrase "including one..." does not exclude the existence of additional identical elements in the process, the method, the article, or the device that includes the element.

The various embodiments in this specification are described in a related manner, and identical or similar parts between the various embodiments may be referenced mutually. Each embodiment focuses on explaining differences from other embodiments. In particular, for system embodiments, since they are substantially similar to the method embodiment, the description is relatively concise, and relevant parts may be referred to the corresponding descriptions of the method embodiments.

The foregoing descriptions are merely preferred embodiments of the present application and are not intended to limit a protection scope of the present application.

**Claims**

1. A method for calibrating a permanent magnet synchronous motor, **characterized by**, comprising:

   acquiring (101) motor inductance parameters under different currents according to a preset direct-quadrature, d-q, axis rotating coordinate voltage equation of the permanent magnet synchronous motor; and
   processing (102) the motor inductance parameters using a preset data processing script to generate a target two-dimensional, 2D, lookup table, wherein the target 2D lookup table comprises d-axis currents and q-axis currents corresponding to different motor flux linkages and motor torques, and is used for calibrating the permanent magnet synchronous motor.

2. The method according to claim 1, wherein the acquiring the motor inductance parameters under different currents according to the preset d-q axis rotating coordinate voltage equation of the permanent magnet synchronous motor comprises:

   presetting a stator resistance and a permanent magnet flux linkage;
   predetermining different stator d-axis currents and different stator q-axis currents;
   monitoring a phase voltage fundamental value and a power factor of the permanent magnet synchronous motor operating under different working conditions; and
   determining a stator d-axis voltage and a stator q-axis voltage based on the phase voltage fundamental value and the power factor.

3. The method according to claim 1, wherein the processing the motor inductance parameters using the preset data processing script to generate the target 2D lookup table comprises:
   processing the motor inductance parameters based on a preset torque equation and the preset data processing script to generate the target 2D lookup table, wherein the motor torque is calculated using the preset torque equation, and the motor flux linkage is calculated based on a preset d-axis voltage and a preset q-axis voltage at a corresponding rational speed.

4. The method according to claim 1, wherein after the processing the motor inductance parameters using the preset data processing script to generate the target 2D lookup table, the method further comprises:

   constructing a feedback closed-loop control model based on the target 2D lookup table, a proportional-integral, PI, regulator and a preset space vector pulse width modulation, SVPWM, algorithm;
   upon detecting that the permanent magnet synchronous motor is in a target operating state, modifying a voltage utilization rate of the permanent magnet synchronous motor based on the feedback closed-loop control model; and
   updating the target 2D lookup table based on the modified voltage utilization rate of the permanent magnet synchronous motor.

5. The method according to claim 4, wherein after the constructing the feedback closed-loop control model based on the target 2D lookup table, the PI regulator and the preset SVPWM algorithm, the method further comprises:

> acquiring a current motor flux linkage and a current motor torque corresponding to the permanent magnet synchronous motor through sensors;
>
> searching the target 2D lookup table for a target d-axis current and a target q-axis current based on the current motor flux linkage and the current motor torque;
>
> obtaining current error values between an actual d-axis current and the target d-axis current, as well as between an actual q-axis current and the target q-axis current, respectively; and
>
> processing the current error values through the PI regulator in the feedback closed-loop control model to generate a target voltage command.

6. The method according to claim 5, wherein the updating the target 2D lookup table based on the modified voltage utilization rate of the permanent magnet synchronous motor comprises:

> obtaining a current voltage utilization rate and a target voltage utilization rate;
>
> generating a modified d-axis current and a modified q-axis current based on the current voltage utilization rate, the target voltage utilization rate, the target d-axis current, and the target q-axis current; and
>
> updating the target 2D lookup table based on the modified d-axis current and the modified q-axis current.

7. The method according to claim 2, wherein the determining the stator d-axis voltage and the stator q-axis voltage based on the phase voltage fundamental value and the power factor comprises:

> summing the power factor angle and a current command angle to acquire angles of the stator d-axis voltage and the stator q-axis voltage, and
>
> calculating the stator d-axis voltage and the stator q-axis voltage based on the phase voltage fundamental value and the angles.

8. The method according to claim 2 or 7, wherein the preset d-q axis rotating coordinate voltage equation of the permanent magnet synchronous motor comprises:

$$Ud=Rs*id+Ld\frac{d}{dt}id-\omega e*Lq*iq,$$

and

$$Ud=Rs*iq+Ld\frac{d}{dt}id-\omega e*Lq*iqd+\omega e*\psi f,$$

wherein, in the preset d-q axis rotating coordinate voltage equation, Ud represents the stator d-axis voltage, Uq represents the stator q-axis voltage, id represents the stator d-axis current, iq represents the stator q-axis current, Rs represents the stator resistance, Ld represents a stator d-axis inductance, Lq represents a stator q-axis inductance, $\omega e$ represents a rotor rotation speed, and $\psi f$ represents the permanent magnet flux linkage.

9. The method according to any one of claims 1, 3, and 8, wherein a calculation formula for the flux linkage is:

$$Us=\sqrt{Ud^2+Uq^2},$$

and

$$\lambda=Us/\omega e,$$

wherein, in the calculation formula, Us represents a motor stator phase voltage, Ud represents the stator d-axis voltage, Uq represents the stator q-axis voltage, $\lambda$ represents the flux linkage, $\omega e$ represents a rotor rotation speed.

10. The method according to claim 3, wherein the torque equation comprises:

$$T=1.5*Pn*iq(\psi pm+(Ld-Lq)*id),$$

wherein, in the torque equation, T represents the motor torque, Pn represents a number of motor pole pairs, iq represents a stator q-axis current, id represents a stator d-axis current, $\psi$pm represents a permanent magnet flux linkage of the motor, Ld represents a stator d-axis inductance of the motor, and Lq represents a stator q-axis inductance of the motor.

11. An electronic device, **characterized by**, comprising a processor (301) and a memory (303), wherein the memory (303) is configured to store computer programs capable of being executed by the processor (301), wherein the computer programs, when executed by the processor (301), cause the processor (301) to implement the method for calibrating the permanent magnet synchronous motor according to any one of claims 1 to 10.

12. A non-transitory computer-readable storage medium configured to store computer programs, **characterized in that**, the computer programs, when executed by a processor, cause the processor to implement the method for calibrating the permanent magnet synchronous motor according to any one of claims 1 to 10.

13. A vehicle, **characterized by** comprising the electronic device according to claim 11.

Acquiring motor inductance parameters under different currents according to a preset direct-quadrature (d-q) axis rotating coordinate voltage equation of the permanent magnet synchronous motor —101

Processing the motor inductance parameters using a preset data processing script to generate a target two-dimensional (2D) lookup table, wherein the target 2D lookup table comprises d-axis currents and q-axis currents corresponding to different motor flux linkages and motor torques, and is used for calibrating the permanent magnet synchronous motor —102

FIG. 1

Acquisition module —201

Calibration module —202

FIG. 2

Processor —301

304

Memory —303

Communication interface —302

FIG. 3

FIG. 4

# EUROPEAN SEARCH REPORT

**Application Number**

EP 25 21 2088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PYO HYUN-JO ET AL: "Study on Inductance Parameter Compensation Method for Flux-Torque Control of IPMSM", IEEE TRANSACTIONS ON MAGNETICS IEEE, USA, vol. 58, no. 8, 27 May 2022 (2022-05-27), pages 1-5, XP011915414, ISSN: 0018-9464, DOI: 10.1109/TMAG.2022.3178141 [retrieved on 2022-05-30] * the whole document * ----- | 1-13 | INV.<br>H02P21/00<br>H02P21/14<br>H02P21/16<br>H02P21/20<br>H02P21/22<br>H02P25/03 |
| A | ALFIO CONSOLI ET AL: "An Effective Energy-Saving Scalar Control for Industrial IPMSM Drives", IEEE TRANSACTIONS ON INDUSTRIAL ELECTRONICS IEEE SERVICE CENTER, PISCATAWAY, NJ., USA, vol. 60, no. 9, 1 September 2013 (2013-09-01), pages 3658-3669, XP011507062, ISSN: 0278-0046, DOI: 10.1109/TIE.2012.2207651 * the whole document * ----- | 1-13 | |
| A | TAN BENKANG ET AL: "Torque-Current Lookup Table Establishment Method for PMSM Considering Parameter Nonlinear Characteristics", 2022 25TH INTERNATIONAL CONFERENCE ON ELECTRICAL MACHINES AND SYSTEMS (ICEMS) IEEE, 29 November 2022 (2022-11-29), pages 1-6, XP034253550, DOI: 10.1109/ICEMS56177.2022.9982842 [retrieved on 2022-12-21] * the whole document * ----- | 1-13 | |

**TECHNICAL FIELDS SEARCHED (IPC)**

H02P

The present search report has been drawn up for all claims

| Place of search | Date of completion of the search | Examiner |
|---|---|---|
| Munich | 3 March 2026 | Wimböck, Thomas |